# EUROPEAN PATENT APPLICATION

(11) **EP 1 415 550 A1**
(43) Date of publication of application: **06.05.2004**
(21) Application number: 02447205.2
(22) Date of filing: 31.10.2002
(51) Int. Cl.: A23L 3/015, A23L 3/00, A23B 5/00

(54) **Method and apparatus for inactivating biological contaminants in food and feed products**

(71) Applicant: LBG Invest & Consulting N.V., 2431 Laakdal (BE)
(72) Inventor: Van Ginneken, Luc, B-2400 Mol (BE); Weyten, Herman, B-2100 Deurne (BE); Willems, Louis, B-2480 Dessel (BE); Lodewijckx, Bert, B-3271 Zichem (BE)
(74) Representative: Van Malderen, Joelle

(57) **Abstract**

The present invention is related to a method and apparatus for inactivating biological contaminants in liquid high fat and/or protein containing food or feed products, comprising the steps of:
- Providing a reactor vessel (3) arranged to hold liquid or gaseous substances under high pressure,
- Introducing an amount between 1 and 75% of the total reactor volume of liquid containing biological contaminants to be inactivated in said reactor (3),
- Introducing carbon dioxide in said heated reactor (3) until a final pressure of between 40 to 350bar is achieved at a predetermined temperature between 20 and 100°C, using a high pressure pump (2)
- Holding said final pressure and predetermined temperature for a predetermined time while stimulating mass transport in said liquid, and
- Reducing the pressure in the reactor (3) and collecting the inactivated liquid via outlet (4).

## Description

### Field of the invention

The present invention is related to a novel method for inactivating biological contaminants such as micro-organisms, spores and enzymes in liquid food and feed products. More particularly, the method of the present invention concerns the use of pressurised carbon dioxide in a method for inactivating biological contaminants in liquid food and feed products, more particularly products with a high protein and/ or fat content such as liquid whole egg, egg white and egg yolk. The present invention is further related to an apparatus for implementing the method of the invention.

### State of the art

Most traditional inactivation methods consist of heat treatments in some or another way. Pasteurisation is a well known and old technique for reducing the microbial count of foodstuffs and is adapted to the difficult balance between overheating (reducing the foodstuff's organoleptic qualities) and underheating (leading to unsafe and low-quality food products). Therefore, usually a compromise has to be found so that an acceptable and safe product is obtained. US 5,019,408 discloses such a method specifically balanced for ultrapasteurising liquid whole egg products, using continuous flow, high temperature short time pasteurisation and using the equivalent point method for evaluating the end product.

Egg products are difficult to sterilise. Their high protein content makes any raw egg product very temperature sensitive. High temperatures, necessary for killing bacteria, very easily lead to reduction of functionality or even coagulation of the egg proteins, which is not desirable for liquid egg products. State-of-the-art methods for sterilising egg products are usually based on pasteurisation techniques. Liquid whole egg can be pasteurised at 60-65°C for 3 to 4 min, leading to a significant reduction of micro-organism contamination. However, some thermoresistant spores of bacteria such as Bacillus cereus can survive this pasteurisation process, especially because the upper temperature of the pasteurisation process is limited by the product characteristics. Further, viscosity of the resulting product is reduced and some denaturation of the egg proteins can be observed which can have important functionality loss as a consequence. Additives to improve the functionality exist but are preferably to be avoided. Liquid egg refers to unprocessed egg contents after removal of the shell. Egg products refer to processed products resulting from the processing of eggs or of various components or mixtures of eggs, or from the further processing of such processed products.

Dairy products, soups, meat preparations, ... show similar problems when their biological contaminants need to be inactivated efficiently. Therefore, a new inactivation method is necessary.

Alternative methods not based on thermal pasteurisation exist for sterilising foodstuffs or equipment. Gamma-irradiation is relatively expensive and customer acceptance for irradiated foodstuffs is low. Pressurised CO₂ has also been used for sterilising purposes. US 6,149,864 discloses a supercritical fluid inactivation method, in which pressurised CO₂ is used for sterilising materials, in particular polymers for drug delivery and implantation. The method disclosed in this document comprises pressure cycling, preferably in the presence of water. The fact that the products that are sterilised are not serving as nutrient source for the contaminants however indicates that the products are not easily infected and that growth of any contaminating micro-organisms is very limited. Natural infection and growth such as appears in food and feed products will entail spoilage of the food and feed products.

Wei et al disclose in "Bacterial Effect of High Pressure CO₂ Treatment on Foods Spiked with *Listeria* or *Salmonella",* Journal of Food Protection, Vol. 54, No. 3, Pages 189-193 (1991) the use of high-pressure CO₂ treatments for controlling pathogenic micro-organisms in model food systems. Mixed results were obtained for different foodstuffs and more importantly, for different micro-organisms. When sterilising egg yolk or liquid whole egg insufficient effect was obtained to provide a safe alternative to pasteurisation. In some cases even increased infection of the foodstuffs was obtained.

Other methods for sterilising liquid food stuffs based on pressurised CO₂ are known from US 5667835, US 5520943, US 5869123 and US5704276. In these methods, the CO₂ is administered through a filter with a predetermined mesh size, leading to CO₂ micro bubbles with a predetermined size. This method is cumbersome to implement and is not applicable to foodstuffs with a high protein and/or fat content due to the high acidification of the treated liquid obtained with this method.

### Aims of the invention

The present invention aims to provide a novel method for the inactivation of biological contaminants in liquid foodstuffs. A further aim is to provide an apparatus for inactivation of biological contaminants in protein and/or fat-containing liquid foodstuffs, more particularly in liquid egg products.

### Summary of the invention

The present invention concerns a method for inactivating biological contaminants in liquid high fat and/or protein containing food or feed products, comprising the steps of:
- Providing a reactor vessel arranged to hold liquid or gaseous substances under high pressure,
- Introducing an amount between 1 and 75 % of the total reactor volume of liquid containing biological contaminants to be inactivated in said reactor,
- Introducing carbon dioxide in said reactor until a final pressure of between 45 to 350 bar is achieved at a predetermined temperature between 20 and 100°C,
- Holding said final pressure and predetermined temperature for a predetermined time while stimulating mass transport in said liquid, and
- Reducing the pressure in the reactor and collecting the inactivated liquid.

Preferably, the liquid is a food or feed product wherein egg is the main ingredient, selected from the group consisting of all combinations of egg yolk (0...100%), and egg white (0...100%), salted whole egg (e.g. salt 10%), sugared whole egg (e.g. sugar 10%), salted egg yolk (e.g. salt 10%), blends of whole egg with preservatives (e.g. potasium sorbate), thickeners (e.g. guar gum) and/ or food acids (e.g. citric acid), blends of egg yolk with preservatives (e.g. potasium sorbate) and/ or food acids (e.g. citric acid), blends of egg white with preservatives (e.g. potasium sorbate), thickeners (e.g. guar gum) and/ or food acids (citric acid), reduced cholesterol egg products and blends thereof, scrambled egg mixes, whole egg with a dry matter between 23.2% and 24.5% and a fat percentage between 9.5% and 12%, egg yolk with a dry matter between 39.5% and 42% and a fat percentage between 24% and 26%, egg white with a dry matter between 11% and 12.5% and a fat percentage between 0 and 2%. The mass transport can be stimulated by known means such as stirring, homogenising, pressure pulsations, shaking, or by providing a countercurrent flow, or any combination thereof.

The method of the present invention can be implemented as a batch process, semi-continuous process or continuous process. It is also possible to devise a two-step or multi-step process in which the liquid foodstuff is subjected to different pressures and/ or temperatures that fall within the range of the present invention.

The biological contamination can comprise any micro-organisms such as bacteria, yeasts, fungi and spores, and/ or enzymes, or any combination thereof. Preferably, the biological contamination comprises micro-organisms selected from the group comprising coliform bacteria, enterobacteriaceae and spore-forming bacteria. In an industrial application, the biological contamination is the "natural" contamination that can be observed in all natural products such as liquid whole egg or the like.

Preferably, the final pressure in the present invention lies between 70 and 150 bar, advantageously between 80 and 100 bar. Further, the temperature lies preferably between 30 and 60°C, advantageously between 31 and 45 °C.

### Short description of the drawings

Fig. 1 represents the general working principle of the high-pressure autoclave according to the present invention.

Fig. 2 represents a set-up for a semi-continuous process according to the present invention.

Fig. 3 represents a set-up for a continuous process according to the present invention.

### Detailed description of the invention

The invention will be further clarified using examples and figures.

### Preparation of contaminants for testing purposes

The examples were carried out with commercially available liquid whole egg products. The products used in the test were provided by Lodewijckx N.V. egg products and comprise pasteurised liquid whole egg (Coco-Vite ®) and unpasteurised liquid whole egg. The liquid whole egg was kept at 0-4°C.

The method was tested on three important pathogens that occur regularly as egg product contaminants: *Escherichia coli, Staphylococcus aureus* and *Salmonella enteritidis.*

*E. coli* (CM2529) (obtained from Pasteur Institute, Lille, France), *Staphylococcus aureus* (ATCC 6538) and *Salmonella enteritidis* (ATCC 13076) were cultivated separately in 869-medium (10 g tryptone, 5 g yeast extract, 5 g NaCl, 1 g glucose D+ and 0.345 g CaCl2.₂H₂O per litre deionised water, equilibrated to pH7 with 40 % NaOH). 1.5 % agar was added to the medium in case plating out was necessary. The medium was autoclaved at 120°C for 15 minutes. A pre-culture of about 10 ml bacteria broth in 869 medium was prepared the day before testing.

Infection of liquid whole egg was tested and quantified by plating out 50 µl in petridishes with 869 medium. Detection limit of this test is thus 20 cfu/ml (1 colony/ dish).

### General working principle for testing

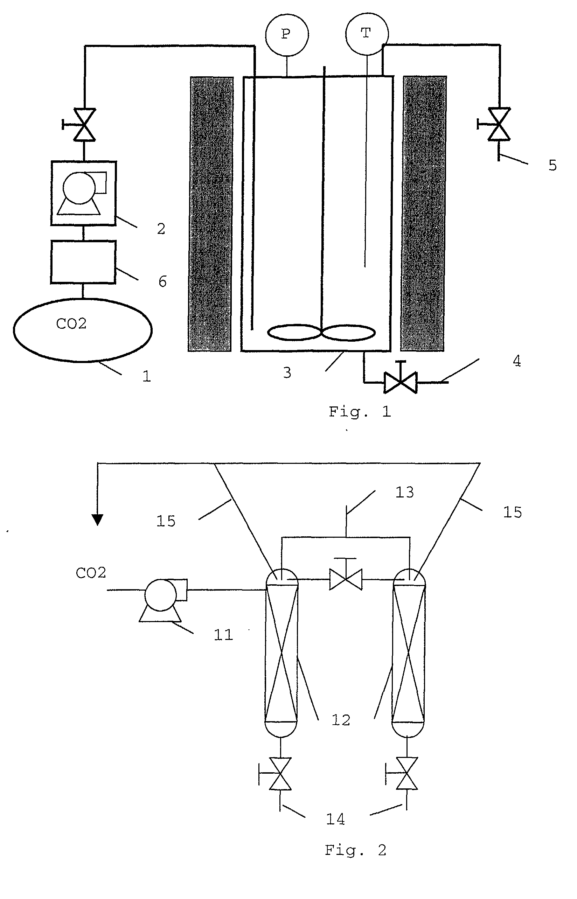

The general working principle of the high-pressure autoclave is shown in fig. 1. Liquid CO₂ (1) is cooled via cooler 6 and pumped with a high pressure pump 2 in the heated autoclave 3, in which the liquid to be inactivated is contained. Pressurised CO₂ is brought into the autoclave and after the inactivation protocol has been followed the carbon dioxide is brought to atmospheric pressure via a pressure reduction valve and carbon dioxide outlet 5.

After decompression, the liquid is released through outlet 4 and the content is analysed on microbial contamination as described above.

The results of the experiments are given in table II. Table I describes what data are represented in table II.

**Table I:**

| **Symbol** | **Data represented** |
|---|---|
| **A** | Reactor volume in ml |
| **B** | Liquid Volume (to be sterilised) in ml |
| **C** | Percentage liquid in the reactor volume |
| **D** | Stirring frequency in rpm |
| **E** | Working pressure in bar |
| **F** | Working temperature in °C |
| **G** | Working time in minutes |
| **H** | Micro-organism contamination type |
| **I** | Micro-organism contamination count in cfu/ml |
| **J** | Control count |
| **K** | Count after inactivation in cfu/ml |
| **L** | Inactivation degree = -log (K/I) |

### Example 1: initial test with E.coli:

In experiments 1 to 13, a series of experiments is given where a 200 ml reactor volume is used, filled with 10 ml liquid whole egg (5% fill percentage). Different pressure and time conditions were used.

The reactor was stirred at a frequency of about 100 rpm.

The results clearly show that stimulation of mass transport improves the inactivation efficiency. The various pressure values tested also show that the efficiency is sufficient over a broad range. A complete inactivation can be obtained at 70 bar after 30 minutes.

Other well known mass transport stimulating measures can be taken besides stirring, such as homogenisation, pressure pulsing, shaking or use of a countercurrent system.

### Example 2: Fill percentage of the container:

To be economically viable, the fill percentage of the reactor has to be as high as possible. Therefore, experiments 14 to 16 were conducted at 80 bar for 60 minutes, stirring frequency of about 100 rpm. The results show that it is possible to obtain a complete inactivation with a reactor fill percentage of 40 %.

### Example 3: Further testing with other micro-organisms:

It is important that all pathogenic micro-organisms can be inactivated by an inactivation process. Therefore, further tests were conducted with Staphilococcus, Salmonella and Bacillus (experiments 17 to 20). The results show that it is possible to inactivate completely all tested micro-organisms with a fill percentage of 40%. In the test using Bacillus cereus, no more spores were found after the inactivation process. The inactivation process is thus also efficient for removing spore contaminants from food products.

In experiment 21, a combination of three previously tested micro-organisms (E. *coli,* S. *aureus* and *S. enteritidis)* was used to contaminate the test whole egg liquid. Results show that the complete inactivation of the contamination is possible.

### Example 4: Inactivation of biological contaminants in unpasteurised liquid whole egg

Inactivation of biological contaminants in unpasteurised liquid whole egg was tested with the process according to the present invention. A test was performed on different samples, as unpasteurised liquid whole egg does not always present a uniform contamination pattern. Counts of total cfu/ml, *Enterobacteriaceae* and coliform contamination was conducted after an inactivation process on 80 ml sample in a 200 ml reactor, pressure of 100 bar, temperature of 40°C for 240 minutes while stirring at 100 rpm.

The results are shown in table 3. A sufficient inactivation is obtained for the total contaminant population, further a complete inactivation of *Enterobacteriaceae* and coliform contaminants is obtained.

It is clear that these experiments are only indicative for an industrial reduction to practice. The skilled person can easily adapt the process parameters to obtain suitable inactivation efficiency.

### Example 5: implementation as a continuous or semi-continuous process

It is also possible to use a continuous or semi-continuous process for the inactivation according to the invention. Figure 2 shows a set-up for an industrial-size batch/ semicontinuous process. The installation comprises two reactor/ separators 12 which can be used alternately. A high pressure pump 11 for the carbon dioxide is also shown. The liquid to be sterilised in brought into the reactor/ separator 12 at the top (13), sterilised liquid comes out at the bottom outlet 14. CO₂ is recycled via outlets 15.

At least two different processes can be envisaged with the set-up of figures 1 and 2:
Process I:
   - Loading reactor/ separator with product.
   - Loading the reactor with CO₂ until the desired pressure is attained.
   - Stirring the reactor for a predetermined period of time, possibly combined with pressure pulses.
   - Let off CO₂ and collect sterilised product.
Process II:
   - Loading reactor with CO₂.
   - Load the reactor with liquid by means of a high-pressure pump.
   - Stirring the reactor for a predetermined period of time, possible combined with pressure pulses.
   - Collect sterilised product.

In the second process, the CO₂ remains in the reactor/ separator with minimal pressure loss.

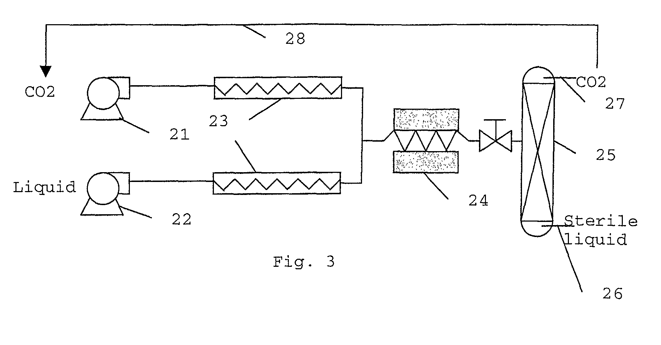

Figure 3 shows a continuous process set-up. High-pressure pumps 21 and 22 respectively pump carbon dioxide and liquid into the reactor 24. The length of the reactor is important because it determines the resident time of the product in contact with the carbon dioxide, which should be sufficiently long to obtain an acceptable inactivation efficiency. Carbon dioxide and liquid are heated up to working temperature with heaters 23. After separation (25), CO₂ can be recycled (28) and sterilised liquid is collected (26). The flow should be sufficiently high to obtain sufficient mixing in the reactor.

It is clear to the person skilled in the art that the inactivation process can easily be divided into different stages. A short high pressure batch process combined with a lower pressure batch process or any other combination can lead to an effective inactivation process. These alternative methods are known to the skilled person and do not depart from the present invention as disclosed.

### Example 6: Functionality test:

Carbon dioxide, high pressure, high temperature and mechanical forces have an influence on the denaturation of proteins. It was therefore important to verify whether liquid egg products are still functional after an inactivation process according to the present invention.

520 ml unpasteurised liquid whole egg was inactivated according to the invention in a 1000 ml container at a pressure of 100 bar at 40°C for 240 minutes while stirring at 100 rpm. The inactivated liquid was used in a baking test.

For the baking test, a cake was prepared according to the following recipe: 250 g of sugar is added to 400 g of eggs or liquid whole egg. The mixture is whipped until a predetermined volume is reached. 250 g of flour is then slowly added while mixing gently. The obtained dough is baked during 20 minutes at 180°C.

Fresh eggs, thermally pasteurised liquid whole egg and liquid whole egg inactivated with the process according to the invention as mentioned above were tested on time needed to obtain the predetermined volume when whipping the egg/ sugar mixture, baked volume, aspect, odour, colour and taste. The results are given in table IV:

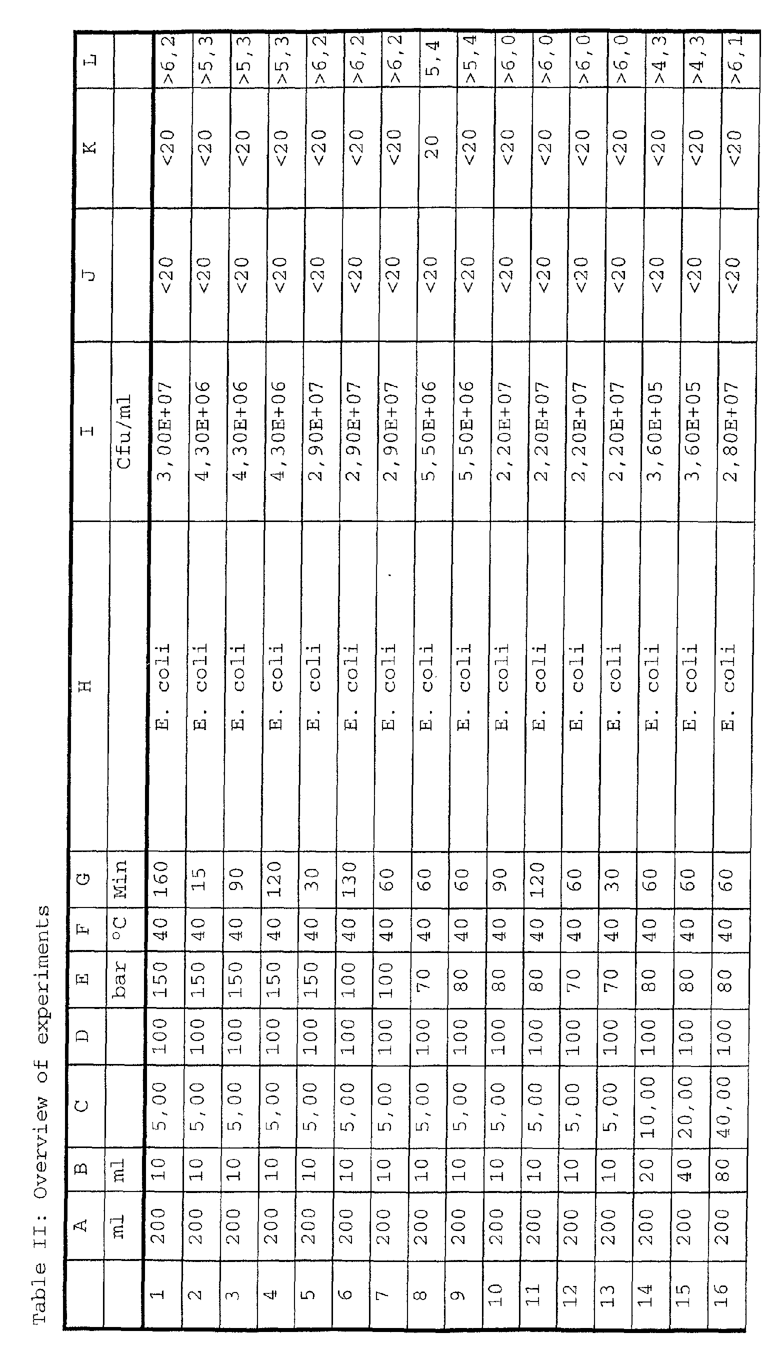

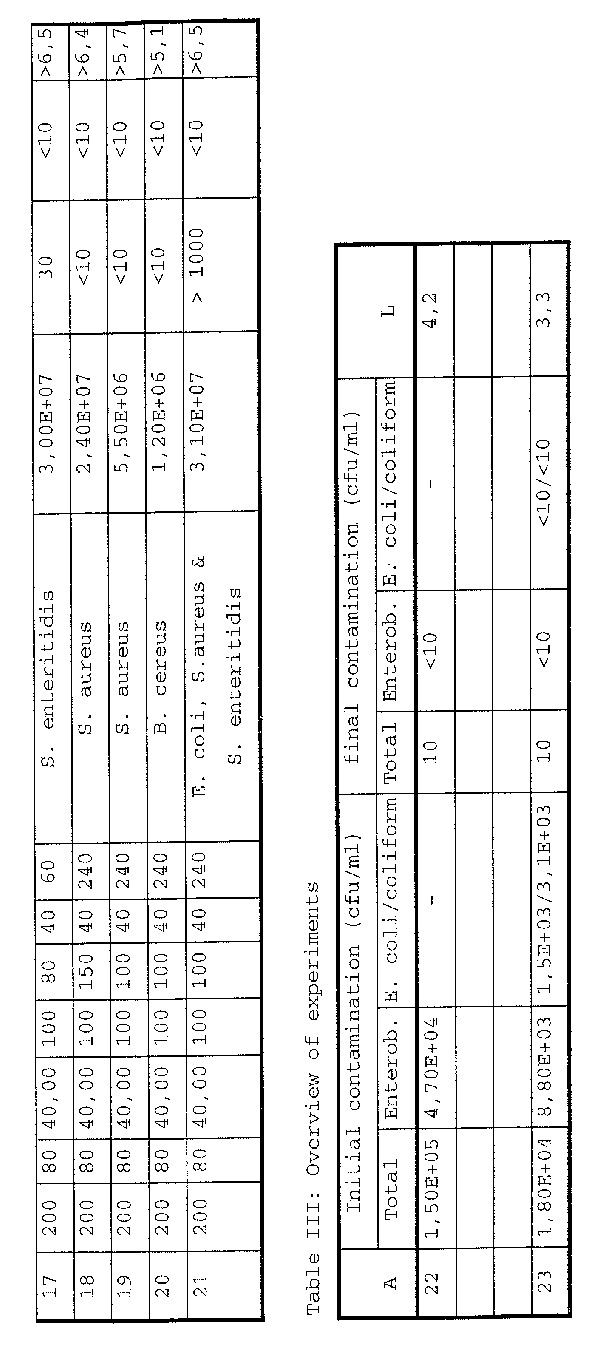

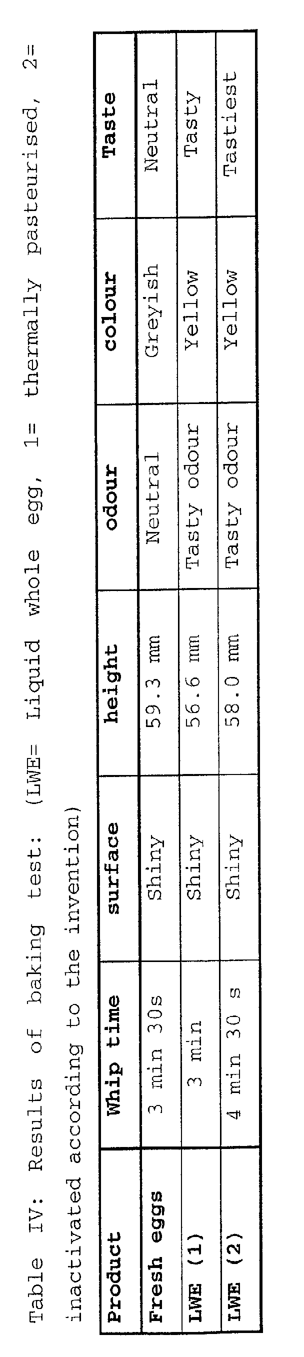

## Claims

1. A method for inactivating biological contaminants in liquid high fat and/ or protein containing food or feed products, comprising the steps of:
• Providing a reactor vessel arranged to hold liquid or gaseous substances under high pressure,
• Introducing an amount between 1 and 75 % of the total reactor volume of liquid containing biological contaminants to be inactivated in said reactor,
• Introducing carbon dioxide in said reactor until a final pressure of between 45 to 350 bar is achieved at a predetermined temperature between 20 and 100°C,
• Holding said final pressure and predetermined temperature for a predetermined time while stimulating mass transport in said liquid, and
• Reducing the pressure in the reactor and collecting the inactivated liquid.

2. The method as in claim 1, wherein the liquid is a food or feed product wherein egg is the main ingredient, selected from the group consisting of all combinations of egg yolk (0...100%), and egg white (0...100%), salted whole egg, sugared whole egg, salted egg yolk, blends of whole egg with preservatives, thickeners and/ or food acids, blends of egg yolk with preservatives and/ or food acids, blends of egg white with preservatives, thickeners and/ or food acids, reduced cholesterol egg products and blends thereof, scrambled egg mixes, whole egg with a dry matter between 23.2% and 24.5% and a fat percentage between 9.5% and 12%, egg yolk with a dry matter between 39.5% and 42% and a fat percentage between 24% and 26%, egg white with a dry matter between 11% and 12.5% and a fat percentage between 0 and 2%.

3. The method as in claim 1 or 2, wherein the mass transport is stimulated by stirring, homogenising, pressure pulsations, shaking, and/ or by providing a countercurrent flow.

4. The method as in any of the claims 1 to 3, wherein the method is implemented as a process selected from the group consisting of batch process, semi-continuous process and continuous process.

5. The method as in any of the claims 1 to 4, wherein the biological contamination is selected from the group consisting of micro-organisms and enzymes.

6. The method as in any of the claims 1 to 5, wherein said biological contamination is selected from the group comprising coliform bacteria, enterobacteriaceae and spore-forming bacteria.

7. The method as in any of the claims 1 to 6, wherein the final pressure lies between 70 and 150 bar.

8. The method as in any of the claims 1 to 7 wherein the temperature lies between 31 and 50°C.
